# EUROPEAN PATENT APPLICATION

(11) **EP 3 995 103 A2**
(43) Date of publication of application: **11.05.2022**
(21) Application number: 20834687.4
(22) Date of filing: 22.06.2020
(51) Int. Cl.: A61C 8/00

(54) **IMPLANT ABUTMENT**

(30) Priority: 01.07.2019 KR 20190078988
(71) Applicant: Ha, Myung Heon, Gyeonggi-do 18132 (KR)
(72) Inventor: Ha, Myung Heon, Gyeonggi-do 18132 (KR)
(74) Representative: J A Kemp LLP
(86) International application number: PCT/KR2020/008096
(87) International publication number: WO 2021/002620

(57) **Abstract**

An implant abutment is disclosed. An implant abutment for connecting a fixture and an artificial prosthesis, according to one embodiment of the present invention, comprises: an abutment lower part coupled to the fixture; an abutment upper part coupled to the artificial prosthesis, wherein the abutment lower part and the abutment upper part are integrally formed or separately coupled; and a small-movement part, which is interposed between the abutment upper part and the abutment lower part or disposed on a portion or all of the abutment upper part.

## Description

### [Technical Field]

The present invention relates to an implant abutment.

### [Background Art]

Generally, an implant refers to technique in which, by placing an artificial substitute in the maxilla and mandible to replace a lost tooth, the overall function of the oral cavity and teeth is restored. The implant has been widely used in recent years due to having various advantages in that it may not require removal of a target tooth or an adjacent tooth, it is able to minimize inconvenience caused by detachment such as when using a denture, and it allows a dental prosthesis to be maintained and have high stability, thus improving a masticatory function.

The implant mainly consists of a fixture, an abutment, and a dental prosthesis disposed at the top. The fixture is a portion corresponding to a dental root of a natural tooth that is buried in an alveolar bone and fixed, and the abutment is a portion that connects the fixture and the dental prosthesis disposed at the top. Specifically, a lower portion of the abutment is coupled to the fixture by a coupling part and is disposed inside the gum, and an upper portion of the abutment is a portion that is exposed above the gum and coupled to the dental prosthesis disposed at the top.

Despite its advantages of allowing a masticatory function similar to that of a natural tooth and being aesthetically pleasing as compared to conventional dentures, the implant has a limitation in that it is an artificial substitute, and thus it is difficult for the implant to realize the same oral environment as a natural tooth. In particular, in a natural tooth, a periodontal ligament surrounds a dental root, and thus an external impact such as a masticatory pressure is absorbed, and a force received from the outside is balanced by slight movement of the tooth. However, in an implant, since a fixture placed in an alveolar bone does not move at all, there is a problem in that absorption of external impact, proper distribution of masticatory pressure, and the like similar to those of a natural tooth cannot be expected.

### [Disclosure]

### [Technical Problem]

The present invention provides an implant structure that is capable of absorbing a masticatory pressure so that the masticatory pressure is not transmitted to an alveolar bone and a jawbone or a temporomandibular joint and that has a slight movement part interposed on an abutment to implement slight movement during mastication like a natural tooth.

### [Technical Solution]

One embodiment of the present invention provides an implant structure which is an implant abutment for connecting a fixture and a dental prosthesis, the implant abutment including an abutment lower part coupled to the fixture, an abutment upper part coupled to the dental prosthesis, and a slight movement part interposed between the abutment upper part and the abutment lower part or interposed on a portion of the abutment upper part or the entire abutment upper part, wherein the abutment lower part and the abutment upper part are integrally formed or are separately formed and coupled to each other.

In an embodiment of the present invention, the slight movement part may be made of a thermoplastic polymer material.

In an embodiment of the present invention, the thermoplastic polymer material may be any one of silicone, polyurethane, polycarbonate, polyether urethane, polyethylene oxide, fluorocarbon, and polyether or a combination of two or more thereof.

In an embodiment of the present invention, the thermoplastic polymer material may cause plastic deformation in a temperature in a range of 25 °C to 70 °C.

In an embodiment of the present invention, the slight movement part may be a filled column or a void column whose central portion is hollow.

In an embodiment of the present invention, an upper end portion of the abutment lower part or a lower end portion of the abutment upper part may include a fixing part which has a diameter smaller than a diameter of the upper end portion or the lower end portion and protrudes upward or downward and a fixing part insertion groove which corresponds to a protruding length and the diameter of the fixing part, the slight movement part may be a void cylinder whose central portion is hollow, and the fixing part may be coupled to the fixing part insertion groove via the void of the slight movement part.

In an embodiment of the present invention, the slight movement part may include a protruding step which is disposed at a central portion of a side surface of the cylinder and has a diameter larger than that of a bottom surface of the cylinder, the upper end portion of the abutment lower part or the lower end portion of the abutment upper part may include a seating step which is an outer edge higher than a seating part which is an upper end surface or a lower end surface excluding the fixing part, and the protruding step of the slight movement part may be seated on the seating step while the bottom surface of the cylinder of the slight movement part is seated on the seating part.

In an embodiment of the present invention, the slight movement part may include a concave joining base disposed at the bottom surface of the cylinder, the upper end portion of the abutment lower part may include a convex seating step which is disposed at a central portion of the seating part, which is the upper end surface excluding the fixing part, and higher than the seating part, and the concave joining base of the slight movement part may be coupled to the convex seating step by being fitted thereto or by using an adhesive.

In an embodiment of the present invention, the slight movement part may be a filled cylinder and may include a protruding step which is disposed at a central portion of a side surface of the cylinder and has a diameter larger than that of a bottom surface of the cylinder, the upper end portion of the abutment lower part may include a lower seating step which is an outer edge higher than an upper seating part which is an upper end surface, the lower end portion of the abutment upper part may include an upper seating step which is an outer edge higher than a lower seating part which is a lower end surface, and the protruding step of the slight movement part may be seated on the upper and lower seating steps while the bottom surface of the cylinder of the slight movement part is seated on the upper and lower seating parts.

In an embodiment of the present invention, the slight movement part may surround the abutment upper part.

In an embodiment of the present invention, a slight movement part coupling groove may be formed in an upper end surface of the abutment upper part, the slight movement part may be coupled to the upper end surface of the abutment upper part and may include a fixing part which is disposed at a lower end portion of the slight movement part and protrudes with a diameter smaller than that of a lower end surface, and the fixing part may be seated on the slight movement part coupling groove.

### [Advantageous Effects]

According to the present invention, due to a slight movement part interposed on an abutment, slight movement of a natural tooth can be implemented, and a masticatory pressure can be absorbed so as not to be transmitted to an alveolar bone and a jawbone or a temporomandibular joint.

Also, during mastication of extremely hard food, the slight movement part which absorbs impact or distributes force can prevent a dental prosthesis from being easily broken.

### [Description of Drawings]

FIG. 1 is an exemplary view for describing a configuration of an implant abutment according to an embodiment of the present invention.
FIGS. 2 to 10 are exemplary views for describing configurations of an implant abutment according to other embodiments of the present invention.

### [Modes of the Invention]

Exemplary embodiments of the present invention will be described with reference to the accompanying drawings to allow thorough understanding of the configurations and advantageous effects of the present invention. However, the present invention is not limited to the embodiments disclosed below and may be implemented in various other forms or modified in various ways. The description of the embodiments only makes the disclosure of the present invention complete and is only provided to completely inform those of ordinary skill in the art to which the present invention pertains of the scope of the invention. In the accompanying drawings, for convenience of description, elements are drawn with a size larger than their actual size, and a proportion of each element may be exaggerated or reduced.

Terms such as first and second may be used to describe various embodiments, but the elements are not limited b such terms. The terms are only used for the purpose of distinguishing one element from another element. For example, without departing from the scope of the present invention, "first element" may be referred to as "second element," and likewise, "second element" may also be referred to as "first element." Also, a singular expression includes a plural expression unless the context clearly indicates otherwise. Unless defined otherwise, the terms used in the embodiments of the present invention may be interpreted as having a meaning commonly known by those of ordinary skill in the art.

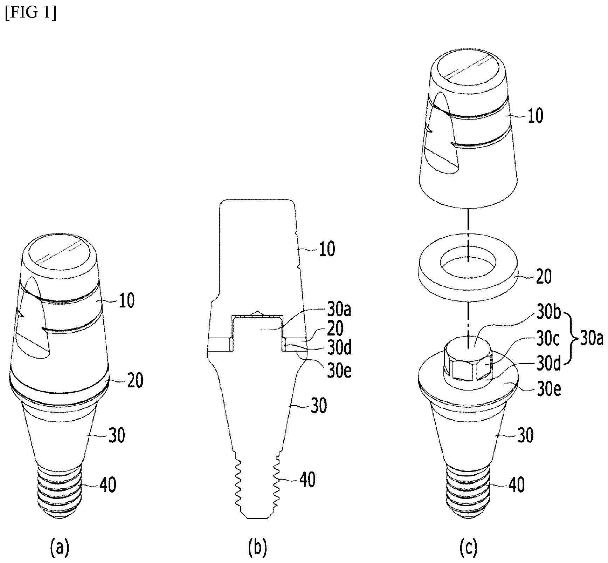

Hereinafter, an implant structure according to an embodiment of the present invention will be described with reference to FIGS. 1 to 10.

FIG. 1 is an exemplary view for describing a configuration of the implant structure according to the embodiment of the present invention. FIG. 1A is a coupling view, FIG. 1B is a vertical cross-sectional view, and FIG. 1C is an exploded perspective view.

Referring to FIG. 1, in the implant structure according to the embodiment of the present invention, an abutment includes an abutment upper part 10, a slight movement part 20, an abutment lower part 30, and a coupling part 40 which is coupled to a fixture placed in an alveolar bone.

In the embodiment of the present invention, the abutment lower part 30 is disposed inside the gum, and the abutment upper part 10 is exposed above the gum and coupled to a dental prosthesis. The same may apply for the following description of each embodiment, and thus description thereof will be omitted to avoid repeated description.

A fixing part 30a is disposed at an upper end surface of the abutment lower part 30 so as to be coupled to the abutment upper part 10. Here, the fixing part 30a has a structure that protrudes upward with a diameter smaller than a diameter of the upper end surface of the abutment lower part 30, and a fixing part insertion groove which corresponds to a protruding length of the fixing part 30a and the diameter thereof is formed in a lower end surface of the abutment upper part 10 to allow coupling to the fixing part 30a. A surface of the fixing part 30a may be implemented to have a polygonal structure 30c so as to be fitted and coupled to the fixing part insertion groove of the abutment upper part 10 without being detached therefrom.

Meanwhile, the slight movement part 20 is interposed between the lower end surface of the abutment upper part 10 and the upper end surface of the abutment lower part 30. The slight movement part 20 slightly moves the implant structure in response to a masticatory pressure during mastication. Due to slight movement of the implant structure, the masticatory pressure is prevented from being transmitted to a jawbone and a temporomandibular joint, and thus the dental prosthesis may be prevented from being broken, and slight movement similar to that of a natural tooth may be implemented.

The slight movement part 20 may be made of a thermoplastic polymer material. The thermoplastic polymer material has a characteristic of softening at a specific temperature but hardening at temperatures other than the specific temperature. As the thermoplastic polymer material constituting the slight movement part 20 of the present invention, one of silicone, polyurethane, polycarbonate, polyether urethane, polyethylene oxide, fluorocarbon, and polyether or a combination of two or more thereof may be used. Due to having a property of causing plastic deformation a temperature in a range of 25 °C to 70 °C, the thermoplastic polymer material may, when placed in the gum, soften at human body temperature and cause the abutment to slight move during mastication.

Meanwhile, due to being placed in an alveolar bone, the implant structure often causes inflammation or bleeding of the gum or inside the gum. When bleeding occurs and causes blood clotting, inflammation may occur, and the implant may have to be replaced, or even when not replaced, the implant may be unable to properly perform its function. The thermoplastic polymer material of the present invention is highly resistant to blood clotting, and thus, even when bleeding occurs in the gum or the like, the possibility of an occurrence of blood clotting after blood adheres to the material is extremely low. Accordingly, slight movement of the thermoplastic polymer material itself is possible during mastication.

The slight movement part 20 has a cylindrical shape and is formed as a void to allow the fixing part 30a of the abutment lower part to pass therethrough. A seating part 30e excluding the fixing part is disposed at an upper end portion of the abutment lower part, and the slight movement part 20 is seated on the seating part 30e and coupled to the abutment lower part 30. Here, a contact portion 30d of the fixing part 30a that comes into contact with the inside of the void of the slight movement part 20 has a circular structure, instead of a polygonal structure, in order to come in close contact with the slight movement part 20. The slight movement part 20 is coupled to the seating part 30e of the abutment lower part and the abutment upper part 10 by an adhesive.

In the embodiment of the present invention, the slight movement part 20 is illustrated as having a circular shape, but the shape of the slight movement part 20 is not limited thereto.

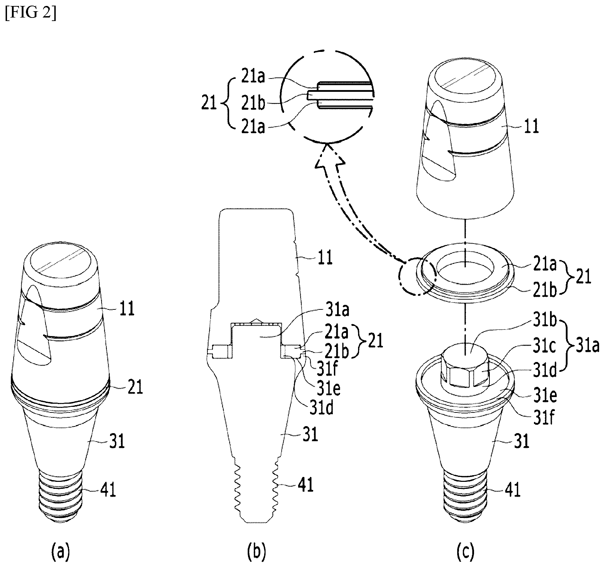

FIG. 2 is an exemplary view for describing a configuration of an abutment of an implant structure according to another embodiment of the present invention. FIG. 2A is a coupling view, FIG. 2B is a vertical cross-sectional view, and FIG. 2C is an exploded perspective view. Description of elements identical to those of FIG. 1 will be omitted.

Referring to FIG. 2, in the abutment of the implant structure according to an embodiment of the present invention, a slight movement part 21 is interposed between an abutment lower part 31 and an abutment upper part 11. The slight movement part 21 of the present invention has a hollow cylindrical shape and includes a protruding step 21b which is disposed at a central portion of a side surface of the cylinder and has a diameter larger than that of a bottom surface 21a of the cylinder.

A fixing part 31a of the abutment lower part protrudes to be coupled to the abutment upper part 11, and a polygonal structure 31c for coupling to the abutment upper part 11 is the same as in FIG. 1C.

Meanwhile, a seating step 31f which is an outer edge higher than a seating part 31e which is an upper end surface excluding the fixing part is formed at an upper end portion of the abutment lower part. Thus, when the slight movement part 21 is coupled to the abutment lower part 31, the bottom surface 21a of the slight movement part 21 is seated on the seating part 31e, and the protruding step 21b of the slight movement part is interposed to correspond to the seating step 31f. Using an adhesive when interposing the slight movement part 21 between the abutment lower part and the lower end portion of the abutment upper part is the same as described above with reference to FIG. 1.

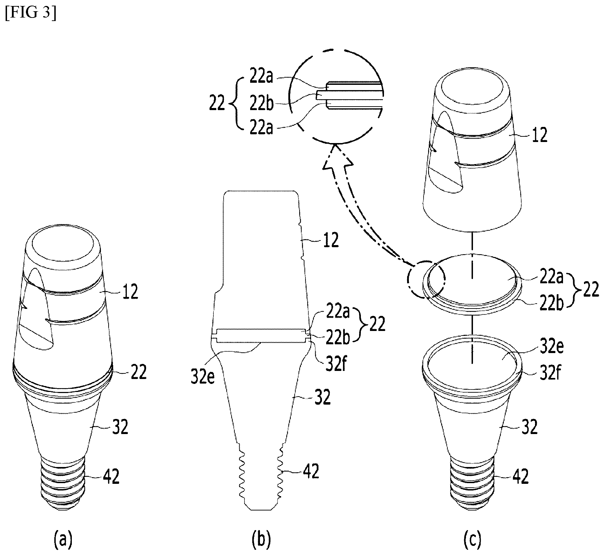

FIG. 3 is an exemplary view for describing a configuration of an abutment of an implant structure according to another embodiment of the present invention. FIG. 3A is a coupling view, FIG. 3B is a vertical cross-sectional view, and FIG. 3C is an exploded perspective view. Description of elements identical to those of FIG. 1 will be omitted.

Referring to FIG. 3, in the abutment of the implant structure according to an embodiment of the present invention, a slight movement part 22 is interposed between an upper end portion of an abutment lower part 32 and a lower end portion of an abutment upper part 12. The slight movement part 22 of the present invention has a filled cylindrical shape and includes a protruding step 22b which is disposed at a central portion of a side surface of the cylinder and has a diameter larger than that of a bottom surface 22a of the cylinder.

Meanwhile, a seating part 32e of the abutment lower part on which the slight movement part 22 is seated is formed to be lower than a lower seating step 32f which is an edge. Thus, when the slight movement part 22 is coupled to the abutment lower part 32, the bottom surface 22a of the slight movement part 22 is seated on the seating part 32e, and the protruding step 22b of the slight movement part is interposed to correspond to the lower seating step 32f. An upper seating step (not illustrated) which is an outer edge higher than the seating part which is a lower end surface is formed at a lower end portion of the abutment upper part 12, the bottom surface 22a of the slight movement part 22 is seated on an upper seating part, and the protruding step 22b of the slight movement part is interposed to correspond to the upper seating step. Using an adhesive when interposing the slight movement part 22 between the abutment lower part and the lower end portion of the abutment upper part is the same as described above with reference to FIG. 1.

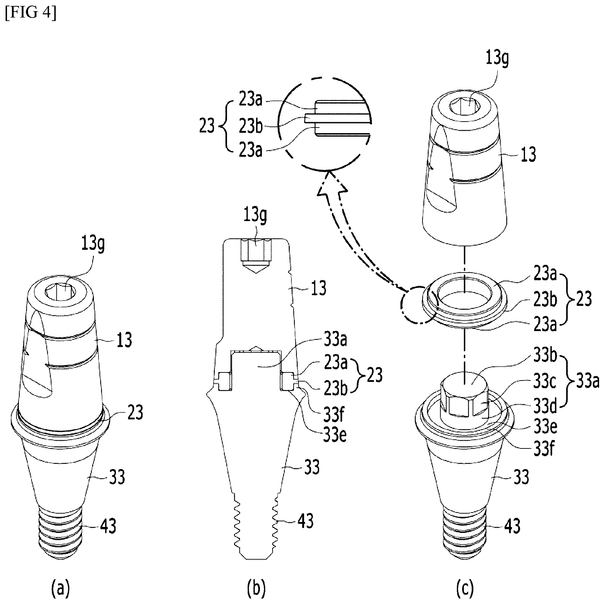

FIG. 4 is an exemplary view for describing a configuration of an abutment of an implant structure according to another embodiment of the present invention. FIG. 4A is a coupling view, FIG. 4B is a vertical cross-sectional view, and FIG. 4C is an exploded perspective view. Description of elements identical to those of FIG. 1 or 2 will be omitted.

Referring to FIG. 4, in the abutment of the implant structure according to an embodiment of the present invention, a tool insertion groove 13g to which a tool is fastened upon placement may be formed in an upper end portion of an abutment upper part 13. Other configurations are the same as in FIG. 2, and thus detailed description thereof will be omitted.

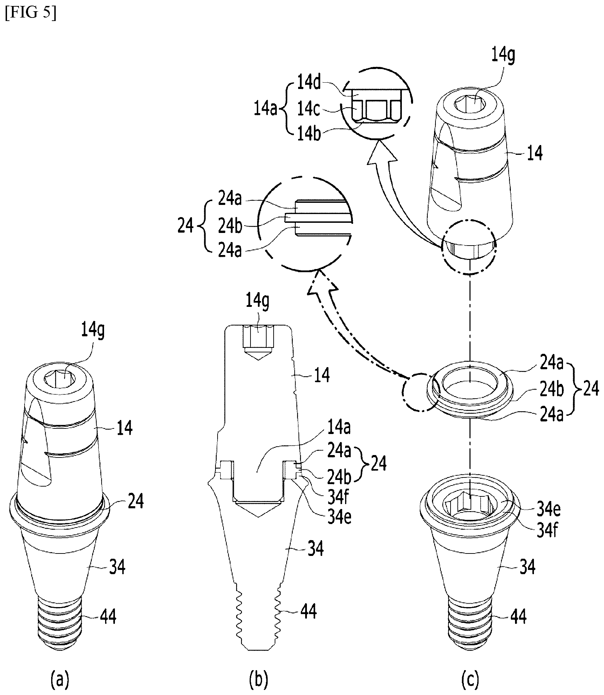

FIG. 5 is an exemplary view for describing a configuration of an abutment of an implant structure according to another embodiment of the present invention. FIG. 5A is a coupling view, FIG. 5B is a vertical cross-sectional view, and FIG. 5C is an exploded perspective view.

Referring to FIG. 5, in the abutment of the implant structure according to an embodiment of the present invention, a slight movement part 24 is interposed between an abutment lower part 34 and a lower end portion of an abutment upper part 14. The slight movement part 24 of the present invention has a hollow cylindrical shape and includes a protruding step 24b which is disposed at a central portion of a side surface of the cylinder and has a diameter larger than that of a bottom surface 24a of the cylinder.

A fixing part 14a is disposed at the lower end portion of the abutment upper part 14, has a protruding shape so as to be coupled to the abutment lower part 34, and has a polygonal structure 14c for coupling to the abutment lower part 34.

Meanwhile, a seating part 34e of the abutment lower part is formed to be lower than a slight movement part seating step 34f which is an edge of the seating part 34e. Thus, when the slight movement part 24 is coupled to the abutment lower part 34, the bottom surface 24a of the slight movement part 24 is seated on the seating part 34e, and the protruding step 24b of the slight movement part is interposed to correspond to the seating step 34f. An adhesive is used when interposing the slight movement part 24 between the abutment lower part and the lower end portion of the abutment upper part.

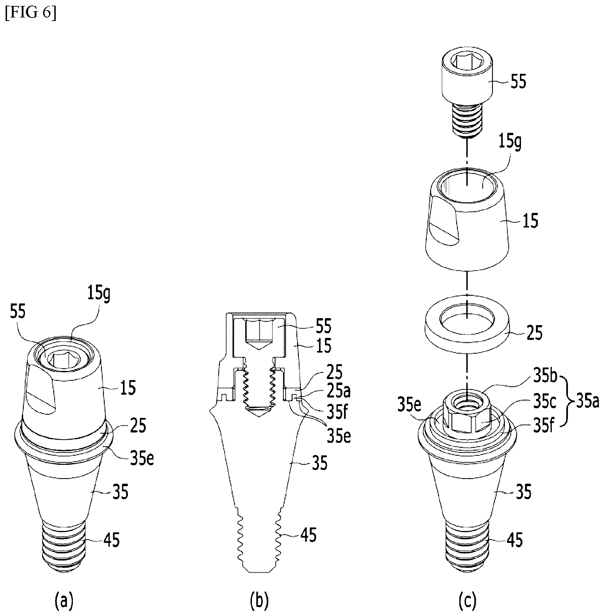

FIG. 6 is an exemplary view for describing a configuration of an abutment of an implant structure according to another embodiment of the present invention. FIG. 6A is a coupling view, FIG. 6B is a vertical cross-sectional view, and FIG. 6C is an exploded perspective view.

Referring to FIG. 6, an upper end portion of an abutment lower part 35 has a fixing part 35a, and the fixing part has a protruding shape so as to be coupled to an abutment upper part 15 and has a polygonal structure 35c for coupling to the abutment upper part 15. Meanwhile, at a central portion of a seating part 35e, which is an upper end surface excluding the fixing part, a convex seating step 35f higher than the seating part is disposed. Also, the fixing part 35a has a diameter smaller than a diameter of the abutment lower part 35.

A slight movement part 25 has a hollow cylindrical shape and includes a concave joining base 25a disposed at a bottom surface of the cylinder. The concave joining base 25a is fitted to the convex seating step 35f of the abutment lower part. Here, the concave joining base 25a may also be coupled to the convex seating step 35f using an adhesive.

Also, a screw insertion groove 15g to which a screw 55 may be coupled may be formed in a surface of the abutment upper part 15.

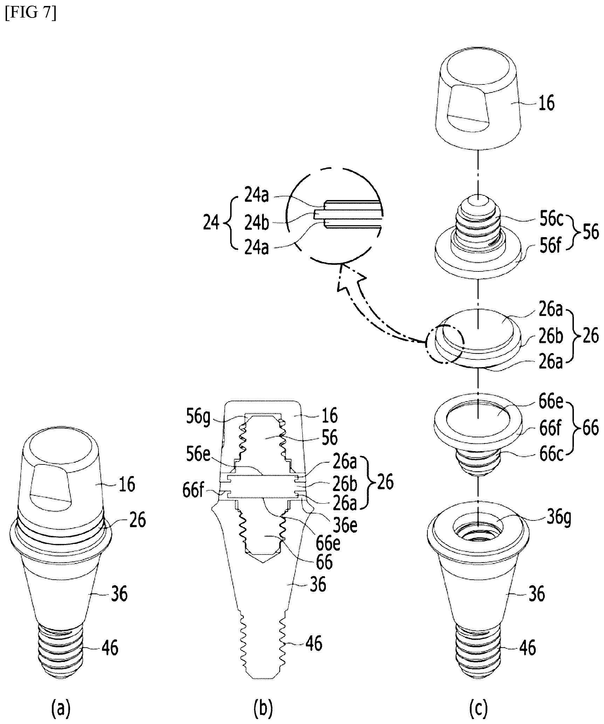

FIG. 7 is an exemplary view for describing a configuration of an abutment of an implant structure according to another embodiment of the present invention. FIG. 7A is a coupling view, FIG. 7B is a vertical cross-sectional view, and FIG. 7C is an exploded perspective view.

Referring to FIG. 7, a slight movement part 26 of the present invention has a filled cylindrical shape and includes a protruding step 26b which is disposed at a central portion of a side surface of the cylinder and has a diameter larger than that of a bottom surface 26a of the cylinder.

Meanwhile, an abutment upper part 16 and an abutment lower part 36 have fixing parts 56 and 66, respectively. The fixing parts 56 and 66 include slight movement part seating parts 56e and 66e and coupling screws 56c and 66c. The bottom surface 26a of the slight movement part 26 is seated on the seating parts 56e and 66e and coupled thereto, and the coupling screws 56c and 66c are coupled to the abutment upper part 16 and the abutment lower part 36 through screw fasteners 36g and 56g.

Meanwhile, the seating parts 56e and 66e of the abutment lower part on which the slight movement part 26 is seated are formed to be lower than slight movement part seating steps 56f and 66f which are edges. Thus, when the slight movement part 26 is coupled to the abutment lower part 36 and the lower end of the abutment upper part 16, the bottom surface 26a of the slight movement part 26 is seated on the seating parts 56e and 66e, and the protruding step 26b of the slight movement part is interposed to correspond to the seating steps 56f and 66f. An adhesive is used when interposing the slight movement part 26 between the abutment lower part and the lower end portion of the abutment upper part.

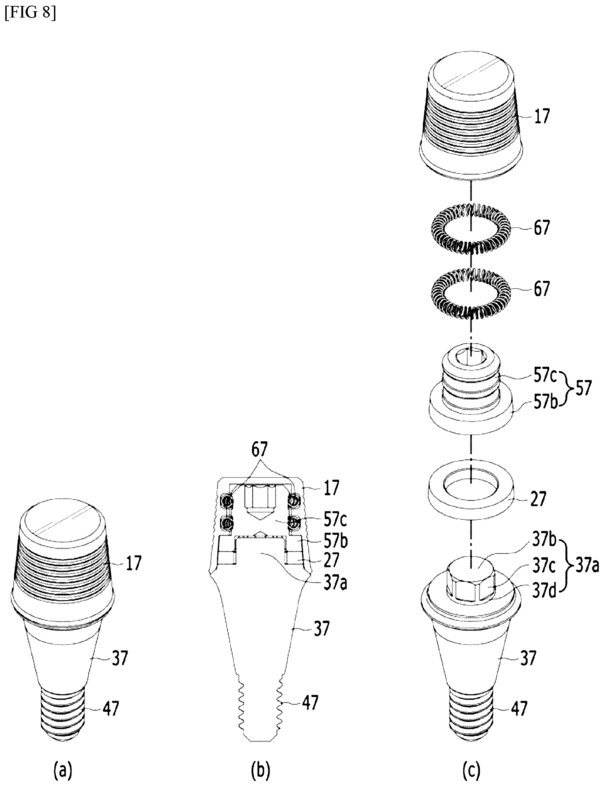

FIG. 8 is an exemplary view for describing a configuration of an abutment of an implant structure according to another embodiment of the present invention. FIG. 8A is a coupling view, FIG. 8B is a vertical cross-sectional view, and FIG. 8C is an exploded perspective view.

Referring to FIG. 8, the configuration is the same as in FIG. 1 except for a spring being interposed on a fixing part 57.

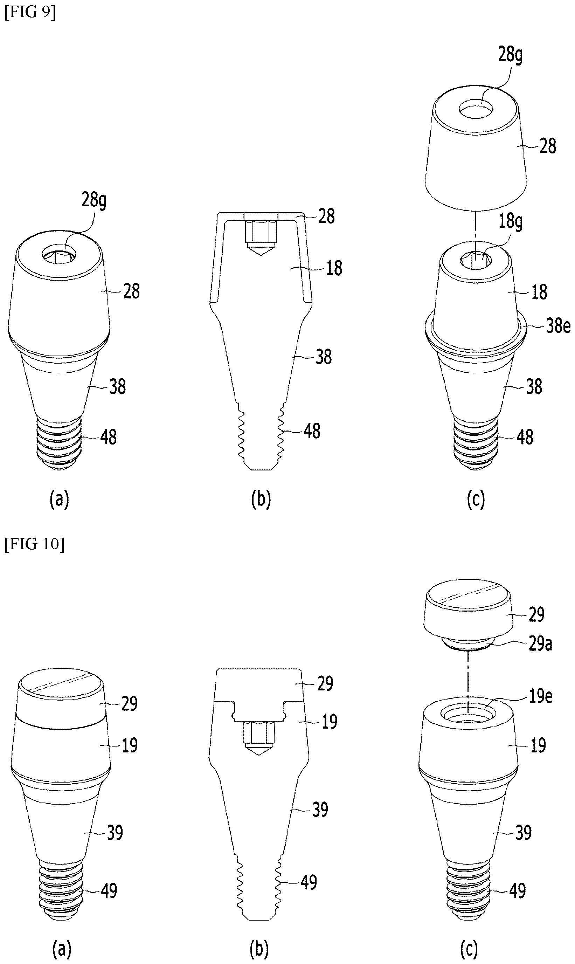

FIG. 9 is an exemplary view for describing a configuration of an abutment of an implant structure according to another embodiment of the present invention. FIG. 9A is a coupling view, FIG. 9B is a vertical cross-sectional view, and FIG. 9C is an exploded perspective view.

Referring to FIG. 9, an abutment lower part 38 and an abutment upper part 18 are integrally formed, a slight movement part 28 has a form surrounding the abutment upper part 18, that is, a form covering the abutment upper part 18 from above while having the shape identical to the shape of the abutment upper part 18, and when the slight movement part 28 is interposed on the abutment upper part 18, a lower portion of the slight movement part 28 is seated on a seating part 38e.

Meanwhile, a tool insertion groove 18g may be disposed in an upper end of the abutment upper part, and likewise, a tool insertion groove 28g may be formed in an upper end of the slight movement part 28.

FIG. 10 is an exemplary view for describing a configuration of an abutment of an implant structure according to another embodiment of the present invention.

FIG. 10A is a coupling view, FIG. 10B is a vertical cross-sectional view, and FIG. 10C is an exploded perspective view.

Referring to FIG. 10, an abutment upper part 19 and an abutment lower part 39 are integrally formed, and a coupling groove 19e for a slight movement part 29 is formed in an upper end surface of the abutment upper part to accommodate the slight movement part 29.

The slight movement part 29 is coupled to the upper end surface of the abutment upper part, and a fixing part 29a is disposed at a lower end portion of the slight movement part and protrudes with a diameter smaller than that of a lower end surface of the slight movement part. The fixing part 29a is seated on the coupling groove 19e.

Embodiments according to the present invention have been described above, but the above description is only illustrative, and those of ordinary skill in the art should understand that various modifications and other equivalent embodiments are possible therefrom. Accordingly, the actual technical scope of the present invention should be defined by the claims below.

## Claims

1. An implant abutment for connecting a fixture and a dental prosthesis, the implant abutment comprising:
an abutment lower part coupled to the fixture;
an abutment upper part coupled to the dental prosthesis; and
a slight movement part interposed between the abutment upper part and the abutment lower part or interposed on a portion of the abutment upper part or the entire abutment upper part,
wherein the abutment lower part and the abutment upper part are integrally formed or are separately formed and coupled to each other

2. The implant abutment of claim 1, wherein the slight movement part is made of a thermoplastic polymer material.

3. The implant abutment of claim 2, wherein the thermoplastic polymer material is any one of silicone, polyurethane, polycarbonate, polyether urethane, polyethylene oxide, fluorocarbon, and polyether or a combination of two or more thereof.

4. The implant abutment of claim 2, wherein the thermoplastic polymer material causes plastic deformation in a temperature in a range of 25 °C to 70 °C.

5. The implant abutment of claim 1 or 2, wherein the slight movement part is a filled column or a void column whose central portion is hollow.

6. The implant abutment of claim 1, wherein:
an upper end portion of the abutment lower part or a lower end portion of the abutment upper part includes a fixing part which has a diameter smaller than a diameter of the upper end portion or the lower end portion and protrudes upward or downward and a fixing part insertion groove which corresponds to a protruding length and the diameter of the fixing part;
the slight movement part is a void cylinder whose central portion is hollow; and
the fixing part is coupled to the fixing part insertion groove via the void of the slight movement part.

7. The implant abutment of claim 6, wherein:
the slight movement part includes a protruding step which is disposed at a central portion of a side surface of the cylinder and has a diameter larger than that of a bottom surface of the cylinder;
the upper end portion of the abutment lower part or the lower end portion of the abutment upper part includes a seating step which is an outer edge higher than a seating part which is an upper end surface or a lower end surface excluding the fixing part; and
the protruding step of the slight movement part is seated on the seating step while the bottom surface of the cylinder of the slight movement part is seated on the seating part.

8. The implant abutment of claim 6, wherein:
the slight movement part includes a concave joining base disposed at the bottom surface of the cylinder;
the upper end portion of the abutment lower part includes a convex seating step which is disposed at a central portion of the seating part, which is the upper end surface excluding the fixing part, and higher than the seating part; and
the concave joining base of the slight movement part is coupled to the convex seating step by being fitted thereto or by using an adhesive.

9. The implant abutment of claim 1, wherein:
the slight movement part is a filled cylinder and includes a protruding step which is disposed at a central portion of a side surface of the cylinder and has a diameter larger than that of a bottom surface of the cylinder;
the upper end portion of the abutment lower part includes a lower seating step which is an outer edge higher than an upper seating part which is an upper end surface'
the lower end portion of the abutment upper part includes an upper seating step which is an outer edge higher than a lower seating part which is a lower end surface; and
the protruding step of the slight movement part is seated on the upper and lower seating steps while the bottom surface of the cylinder of the slight movement part is seated on the upper and lower seating parts.

10. The implant abutment of claim 1, wherein the slight movement part surrounds the abutment upper part.

11. The implant abutment of claim 1, wherein:
a slight movement part coupling groove is formed in an upper end surface of the abutment upper part;
the slight movement part is coupled to the upper end surface of the abutment upper part and includes a fixing part which is disposed at a lower end portion of the slight movement part and protrudes with a diameter smaller than that of a lower end surface; and
the fixing part is seated on the slight movement part coupling groove.
